# EUROPÄISCHE PATENTANMELDUNG

(11) **EP 1 424 548 A1**
(43) Veröffentlichungstag der Anmeldung: **02.06.2004**
(21) Anmeldenummer: 03021809.3
(22) Anmeldetag: 26.09.2003
(51) Int. Cl.: G01N 15/14, G02B 21/00

(54) **Partikel-Detektionsverfahren und Mikroskopiereinrichtung zur Partikel-Detektion**

(30) Priorität: 27.09.2002 DE 10245263
(71) Anmelder: Evotec OAI AG, 22525 Hamburg (DE)
(72) Erfinder: Brand, Leif, Dr., 42899 Remscheid (DE); Kirsch, Achim, 22525 Hamburg (DE); Garbow, Norbert, Dr., 22589 Hamburg (DE)
(74) Vertreter: von Kirschbaum, Alexander, Dipl.-Ing.

(57) **Zusammenfassung**

Gemäß des erfindungsgemäßen Verfahrens wird ein von der Bestrahlungseinrichtung (14) abgegebener Strahlungspuls (16) zur Bestrahlung einer zu untersuchenden Probe (22) genutzt. Die Strahlungspulse werden beispielsweise an einer Nipkow-Scheibe (20), die Bestandteil einer Optikeinrichtung (18,20,28) ist, gestreut und gelangen über einen Strahlteiler (38), wie durch die Pfeile (42) dargestellt, zu einer Detektionseinrichtung (30). Zeitlich versetzt hierzu gelangen von in der Probe (22) vorhandenen Partikeln gestreute oder reflektierte Strahlungspulse, wie durch die Pfeile (40,44) dargestellt ist, ebenfalls zur Detektionseinrichtung (30). Auf Grund des zeitlichen Versatzes zwischen diesen an der Detektionseinrichtung (30) ankommenden Streulichtpulsen kann das von in der Probe (22) vorhandenen Partikeln kommende Streulicht festgestellt und zur Bestimmung beispielsweise der Größe und der Form von in der Probe (22) enthaltenen Partikeln genutzt werden.

## Beschreibung

Die Erfindung betrifft ein Verfahren zur Detektion von Partikeln in chemischen und/ oder biologischen und/ oder technischen Proben sowie eine Mikroskopiereinrichtung zur Partikel-Detektion. Insbesondere ist das Verfahren und die Vorrichtung zur pharmazeutischen Wirkstoffsuche geeignet, die insbesondere im Hoch- oder Mediumdurchsatz-Screening durchgeführt werden kann.

Zur Untersuchung der Eignung von chemischen Verbindungen als pharmazeutische Wirkstoffe wird die pharmazeutische Aktivität, beispielsweise mit Hilfe von Fluoreszenzmarkern, nachgewiesen. Hierbei werden beispielsweise Wirkstoffkandidaten, Partikel oder Partikelsuspensionen, beispielsweise Zellen, zugeführt. Die Partikel oder Partikelsuspensionen sind beispielsweise in einem Probenträger, wie einer Mikrotiterplatte o.dgl., angeordnet. Bei den Partikeln oder Partikelsuspensionen handelt es sich beispielsweise um Zellen, die in den einzelnen Vertiefungen (Wells) der Mikrotiterplatte angeordnet sind. Zur Untersuchung des Wirkstoffkandidaten, der beispielsweise den einzelnen Wells zugeführt wird, wird der Wirkstoffkandidat mit einem Farbmarker, beispielsweise einem Fluoreszenzmarker, markiert. Es kann sodann auf Grund der durch den Fluoreszenzmarker hervorgerufenen Fluoreszenz untersucht werden, ob und ggf. in welcher Form der Wirkstoffkandidat mit dem Partikel reagiert. Bei derartigen Untersuchungsmethoden ist es häufig erforderlich, dass zusätzlich zu der Untersuchung einer Reaktion zwischen dem Wirkstoffkandidat und dem Partikel auch ein unabhängiger Nachweis des Partikels selbst durchgeführt wird. Dies ist beispielsweise bei Bindungsassays erforderlich, da die Abwesenheit eines bestimmten Signals entweder bedeuten kann, dass eine erfolgreiche Kompetition vorliegt oder dass kein Partikel, mit dem eine Reaktion stattgefunden hat, in dem beobachteten Volumen vorhanden ist. Bei derartigen Untersuchungen muss somit unabhängig von der Beobachtung der Reaktion nachgewiesen werden, dass sich in dem Beobachtungsvolumen tatsächlich ein Partikel befindet.

Des Weiteren ist es häufig erforderlich, die Form und Größe des Partikels zu bestimmen. Dies ist beispielsweise bei Translokationsexperimenten erforderlich, bei denen beispielsweise von Interesse ist, wo sich die Zelle und die Zellmembran befinden.

Um beispielsweise die Größe oder das Vorhandensein eines Partikels detektieren zu können, ist es bekannt, zusätzlich zu der Markierung des Wirkstoffkandidaten bzw. Reagens mit einem Farbstoffmarker beispielsweise auch die Partikelsuspension mit einem weiteren Farbstoff einzufärben. Hierbei muss ein geeigneter Farbstoff vorgesehen werden, durch den beispielsweise der Zellkern oder die Zellmembran markiert wird. Eine Anwendung dieser unabhängigen Markierung ist beispielsweise in US 5 989 835 beschrieben. Das Verwenden eines zusätzlichen Farbstoffs zur Detektion von Partikeln weist jedoch den Nachteil auf, dass der Farbstoff Einfluss auf das Assay haben kann, so dass die zu untersuchende Reaktion gestört wird. In Abhängigkeit von den zu untersuchenden Partikeln sind teilweise geeignete Farbstoffe nicht erhältlich, so dass ein unabhängiger Nachweis der Partikel überhaupt nicht möglich ist. Des Weiteren ist zur Untersuchung, d.h. zur Messung der durch die an die Partikel gebundenen Farbstoffe, ein zusätzlicher Detektionskanal erforderlich. Hierdurch erhöhen sich die Kosten für die Untersuchungsvorrichtung. Da bei der Verwendung eines Farbstoffs zum Bestimmen eines Partikels oder eines Teils eines Partikels dieser üblicherweise ebenfalls zur Fluoreszenz angeregt wird, wird für die Untersuchung des Vorhandenseins des Partikels ein Teil des elektromagnetischen Spektrums benötigt. Dieser Bereich des Spektrums steht sodann für die Untersuchung der Reaktion zwischen dem Partikel und dem Wirkstoffkandidaten nicht mehr zur Verfügung. Des Weiteren kann durch ein sog. Übersprechen des Referenzkanals in den Signalkanal eine Verfälschung der Messergebnisse hervorgerufen werden.

Aufgabe der Erfindung ist es, ein Verfahren zur Detektion von Partikeln sowie eine Mikroskopiereinrichtung zur verbesserten Partikel-Detektion, insbesondere der Form und Größe der Partikel, zu schaffen.

Die Lösung der Aufgabe erfolgt erfindungsgemäß durch die Merkmale der Ansprüche 1 bzw. 8.

Die Erfindung basiert auf der Erkenntnis, die Bestimmung der Partikel, d.h. insbesondere deren Form und Größe, mit Hilfe von Streu- und Reflexionssignalen durchzuführen. Vorzugsweise erfolgt hierbei eine konfokale Detektion dieser Signale.

Ein konfokaler Nachweis von Streu- und Reflexionslicht bzw. entsprechenden auf Streuung oder Reflexion beruhenden elektromagnetischen Strahlungen kann beispielsweise durch Laser-Scanningmikroskope erfolgen. Das Abscannen der Probe erfolgt hierbei durch mechanisches Bewegen von Spiegeln. Selbst bei bekannten Hochleistungslaser-Scanningmikroskopen benötigt z.B. der Aufbau eines Bildes mit 1024 Zeilen üblicherweise mehr als 0,4 s. Der Einsatz von bekannten Laser-Scanningmikroskopen für das Hoch- oder Mediumdurchsatz-Screening ist daher nicht möglich.

Auch der Einsatz von konfokalen Mikroskopen mit Nipkow-Scheiben zur Detektion von Streu- und/oder Reflexionssignalen, die durch die Partikel selbst erzeugt werden, ist im Hochdurchsatz- bzw. Mediumdurchsatz-Screening nicht möglich, da insbesondere durch das starke Streulicht der Nipkow-Scheibe das von dem Partikel hervorgerufene Streu- und Reflexionslicht bzw. -signal überstrahlt und somit die unterschiedlichen Signale nicht voneinander getrennt werden können. Ein nach dem Nipkow-Prinzip arbeitendes konfokales Mikroskop ist beispielsweise in US 4 927 254 beschrieben.

Des Weiteren ist ein konfokales Mikroskop mit Nipkow-Scheibe aus EP 0 753 779 bekannt, bei welchem zur Effizienzsteigerung eine Scheibe vorhanden ist, die ein Mikrolinsenarray aufweist. Hierbei sind die Mikrolinsen in einer festen geometrischen Anordnung bzgl. der in der Nipkow-Scheibe vorhandenen Öffnungen angeordnet. Auch bei dieser Vorrichtung besteht der Nachteil, dass die Nipkow-Scheibe selbst eine starke Streuung des Beleuchtungslichtes bzw. der elektromagnetischen Strahlung hervorruft.

Um das durch einen Partikel hervorgerufene Streu- und/oder Reflexionslicht bzw. entsprechende elektromagnetische Strahlung unabhängig von in einer entsprechenden Vorrichtung auftretenden Streuungen und Reflexionen detektieren zu können, wird die Probe nach dem erfindungsgemäßen Partikel-Detektionsverfahren in einem ersten Schritt mit einer gepulsten elektromagnetischen Strahlung bestrahlt. Auf Grund des Abstandes zwischen einzelnen Teilen der Optikeinrichtung der Vorrichtung, wie beispielsweise einer Nipkow-Scheibe und der Probe, ergeben sich Laufzeitunterschiede von gestreuten bzw. reflektierten Strahlen, die von Teilen der Optikeinrichtung oder in der Probe vorhandenen Partikeln selbst reflektiert oder gestreut werden. Diese Laufzeitunterschiede führen dazu, dass die an Teilen der Optikeinrichtung bzw. an in der Probe vorhandenen Partikeln gestreuten bzw. reflektierten Strahlen zu unterschiedlichen Zeiten die Detektionseinrichtung erreichen.

Erfindungsgemäß erfolgt das Detektieren von von der Probe kommender, d.h. insbesondere gestreuter und/oder reflektierter Strahlung mittels der Detektionseinrichtung, wobei die Detektionszeiträume, d.h. diejenigen Zeiträume, in denen Strahlung von der Detektionseinrichtung detektiert wird, und die abgegebenen Strahlungspulse, insbesondere deren Länge, derart aufeinander abgestimmt werden, dass von in der Probe vorhandenen Partikeln kommende Strahlung von der durch die Optikeinrichtung hervorgerufenen Strahlung unterscheidbar ist.

Bei den in einer Probe vorhandenen Partikeln handelt es sich insbesondere um markierte Beads oder Zellen sowie synthetische oder polymere Partikel. Selbstverständlich sind auch Kombinationen dieser Partikel möglich.

Auf Grund der Laufzeitunterschiede der unterschiedlichen von der Probe bzw. der Optikeinrichtung kommenden Strahlung können diese beispielsweise dann unterschieden werden, wenn die Länge des Strahlungspulses kürzer ist als der Laufzeitunterschied der von der Probe bzw. Optikeinrichtung kommenden Strahlungen. Die Länge des Strahlungspulses ist beispielsweise kürzer als diejenige Zeit, die der Strahlungspuls benötigt, um von einer Nipkow-Scheibe, d.h. einem streuend wirkenden Teil der Optikeinrichtung, zu der Probe und zurück zur Nipkow-Scheibe zu gelangen. Anhand des Eintreffzeitpunktes der Strahlung auf den Detektor können sodann die Reflexe von der Nipkow-Scheibe von denen aus der Probe separiert werden.

Mit geeigneten, insbesondere zeitauflösenden Detektionseinrichtungen, wie beispielsweise verstärkten CCD-Kameras (ICCD-Kameras), ist es möglich, auch innerhalb sehr kurzer Detektionszeiträume ankommende Strahlung zu messen. Dabei wird der Verstärkungsfaktor eines der CCD-Kamera vorangestellten Verstärkers (Bildverstärkers) vorzugsweise derart variiert, dass er nur für einen kurzen Zeitraum, vorzugsweise kürzer als der Laufzeitunterschied zwischen der von der Probe bzw. der Optikeinrichtung kommenden Strahlung, deutlich von Null abweicht.

Bei einer besonders bevorzugten Ausführungsform des erfindungsgemäßen Partikel-Detektionsverfahrens wird die von in der Probe vorhandenen Partikeln reflektierte bzw. gestreute Strahlung nicht nur detektiert, sondern zusätzlich aus der detektierten Strahlung ein Bild erzeugt. Mit Hilfe eines derartigen bildgebenden Verfahrens kann zusätzlich auch die Form und/ oder Größe eines in der Probe vorhandenen Partikels bestimmt werden. Zur Bilderzeugung sind beispielsweise die vorstehend erwähnten CCD-Kameras, insbesondere in Verbindung mit Bildverstärkern und geeigneter Bildverarbeitungssoftware geeignet.

Da es mit Hilfe des erfindungsgemäßen Verfahrens möglich ist, die beispielsweise zwei Pulse, von denen einer von der Optikeinrichtung und der andere von der Probe erzeugt wird, zu unterscheiden, kann der von der Probe kommende Puls, wie das von der Probe gestreute bzw. reflektierte Licht, gesondert detektiert und insbesondere zur Partikelbestimmung, z.B. der Größe, der Form und/oder der Lage eines Partikels genutzt werden. Ein zusätzlicher Farbstoffmarker bzw. Farbstoff, der beispielsweise zum Einfärben einer Zelle, eines Zellkerns oder einer Zellmembran dient, ist bei dem erfindungsgemäßen Verfahren nicht erforderlich. Auf Grund der Trennung der von der Optikeinrichtung oder Teilen der Optikeinrichtung und der von der Probe hervorgerufenen Streuung ist die beispielsweise durch die Nipkow-Scheibe oder einen anderen Teil der Optikeinrichtung hervorgerufene Streuung bei der Bestimmung der Partikel nicht störend. Auch bei der Bestimmung anderer von der Probe kommender Strahlung, wie beispielsweise durch Fluoreszenz erzeugte Strahlung ist das erfindungsgemäße Verfahren vorteilhaft, da auch hierbei ggf. die Messergebnisse verfälschende Streuungen oder Reflexionen in der Optikeinrichtung zeitlich herausgefiltert werden können.

Vorzugsweise erfolgt nach dem Detektieren der von der Probe kommenden Strahlungspulse ein Erzeugen eines Bildes, so dass es sich um ein bildgebendes Verfahren handelt. Bei einem bildgebenden Verfahren handelt es sich beispielsweise um ein Verfahren, bei welchem das gemessene Signal einer mindestens zweidimensionalen, vorzugsweise räumlichen Anordnung von Punkten in der Probe, der Probe zugeordnet wird. Beispielsweise wird ein Fokuspunkt durch die Probe bewegt, so dass ein Scannen der Probe in einer Ebene, d.h. in einer X- und einer Y-Richtung, erfolgt. Hierbei wird der Zeitverlauf der Intensität gemessen. Mit dem bekannten Zusammenhang zwischen den räumlichen Koordinaten des Fokus und dem Zeitpunkt läßt sich aus der Intensität ein zweidimensionales Bild rekonstruieren. Sofern die räumliche Anordnung nicht von Bedeutung ist, kann auf die Rekonstruktion verzichtet werden. Statistische Daten über die Bildintensität können häufig auch aus der Zeitserie bestimmt werden, wobei es sich hierbei sodann nicht mehr um ein bildgebendes Verfahren handelt.

Vorzugsweise entsprechen die Detektionszeiträume der Detektionseinrichtung maximal der Dauer bzw. Länge der Strahlungspulse. Hierdurch ist sichergestellt, dass auch von einem nachfolgenden Strahlungspuls keine an der Optikeinrichtung reflektierte oder gestreute Strahlung die Messergebnisse derjenigen Strahlung verfälscht, die durch den vorangegangenen Strahlungspuls in der Probe vorzugsweise als Streu- oder Reflexionsstrahlung erzeugt wurde.

Insbesondere sind die Detektionszeiträume der Detektionseinrichtung kürzer als die Laufzeitunterschiede der von der Probe bzw. Optikeinrichtung kommenden Strahlung. Es verbleibt somit nach der Detektion ausreichend Zeit beispielsweise zum Auslesen der von einem CCD-Array empfangenen Signale.

Bei einer besonders bevorzugten Ausführungsform werden die Detektionszeiträume mit der Pulsabgabe synchronisiert. Es findet somit vorzugsweise eine Synchronisation der Länge sowie des Abstandes einzelner Detektionszeiträume mit der Länge und dem Abstand der Pulse statt. Von der Optikeinrichtung und der Probe kommende Pulse treffen vorzugsweise abwechselnd auf die Detektoreinrichtung. Die an der Detektoreinheit ankommenden Pulse haben im Allgemeinen nicht die Reihenfolge der Pulse von der gepulsten Lichtquelle. Vielmehr kann der Laufzeitunterschied größer als der zeitliche Abstand von zwei Pulsen sein. In dem Falle kommen Pulse von an der Optikeinrichtung gestreutem Licht zum Puls n + m (m ≥ 1) vor den Pulsen von an der Probe gestreuten Lichtpulsen an. Der Weglängenunterschied, der z.B. dem doppelten Abstand zwischen Nipkow-Scheibe und Probe entspricht bzw. die Zeit zwischen zwei Pulsen, sollte vorzugsweise derart eingestellt werden, dass sich reflektierte/gestreute Pulse im Bereich vor dem Detektor (z.B. zwischen Nipkow-Scheibe und Detektor) nicht überschneiden.

Die Detektionszeiträume und/oder die Dauer der Strahlungspulse ist vorzugsweise kleiner als 1 µs. Es ist besonders bevorzugt, dass die Detektionszeiträume und/oder die Dauer der Strahlungspulse kleiner als 100 ns, insbesondere kleiner als 10 ns und besonders bevorzugt kleiner als 1 ns ist. Vorzugsweise sind die Zwischenräume zwischen aufeinanderfolgenden Strahlungspulsen mindestens 1 ns, insbesondere mindestens 10 ns, vorzugsweise das Doppelte der Dauer der Strahlungspulse. Hierdurch ist gewährleistet, dass sich die Pulse von der Probe bzw. der Optikeinrichtung nicht wesentlich überlagernd eingestellt werden können.

Die Auslesezeit des Detektors spielt bei verstärkten CCD-Kameras keine wesentliche Rolle, da die Signale von mehreren von der Probe kommenden Pulsen aufsummiert werden können, ohne dass die von der Optikeinrichtung kommenden Pulse detektiert werden. Dadurch kann die Signalstärke und damit auch das S/B-Verhältnis verbessert werden.

Die Erfindung betrifft ferner eine Mikroskopiereinrichtung zur Partikel-Detektion in chemischen und/oder biologischen Proben. Diese Vorrichtung ist insbesondere zur Durchführung des erfindungsgemäßen Partikel-Detektionsverfahrens geeignet. Die Untersuchungsvorrichtung weist eine Bestrahlungseinrichtung, wie beispielsweise einen Laser, auf, der zum Bestrahlen der Probe mit gepulster elektromagnetischer Strahlung dient. Des Weiteren weist die Vorrichtung eine Detektionseinrichtung, insbesondere eine zeitauflösende Detektionseinrichtung, wie eine verstärkte CCD-Kamera oder ein CCD-Array, zur Detektion von in der Probe vorhandenen Partikeln kommender Strahlung auf. Wie vorstehend beschrieben, handelt es sich bei dieser Strahlung insbesondere um von der Probe bzw. von in der Probe enthaltenen Partikeln gestreuter oder reflektierter Strahlung. Es kann sich jedoch auch um unmittelbare Probenpartikel bzw. in der Probe vorhandenen Markern u.dgl. erzeugte Strahlung, beispielsweise Fluoreszenzstrahlung, handeln.

Des Weiteren weist die erfindungsgemäße Vorrichtung eine Optikeinrichtung auf, die im Strahlengang angeordnet ist. Die Optikeinrichtung dient insbesondere zur Abbildung bzw. Fokussierung der Strahlung in der Probe. Ferner kann die Optikeinrichtung zur Bündelung etc. der Strahlung dienen. Insbesondere weist die Optikeinrichtung einen Strahlteiler, wie einen dichroitischen Spiegel, auf, der einerseits für von der Bestrahlungseinrichtung kommende Strahlung durchlässig und für von der Probe kommende Strahlung undurchlässig ist, so dass die von der Probe kommende Strahlung in Richtung einer Detektoreinrichtung abgelenkt wird. Des Weiteren kann die Optikeinrichtung vorzugsweise eine Nipkow-Scheibe o.dgl. sowie ein Mikrolinsenarray, insbesondere in Form einer Mikrolinsenscheibe, aufweisen.

Erfindungsgemäß sind bei der Vorrichtung die von der Bestrahlungseinrichtung abgegebenen Strahlungspulse, insbesondere deren Länge, und die Detektionszeiträume der Detektionseinrichtung derart aufeinander abgestimmt, dass von der Probe kommende Strahlung, insbesondere durch Streuung und Reflexion hervorgerufene Strahlung, von durch die Optikeinrichtung hervorgerufener Strahlung, bei der es sich i.A. um gestreute oder reflektierte Strahlung der Bestrahlungseinrichtung handelt, unterscheidbar ist. Die Unterscheidbarkeit wird, wie vorstehend beschrieben, durch den Weglängenunterschied gegenüber der in der Optikeinrichtung bzw. an Teilen der Optikeinrichtung gestreuten bzw. reflektierten Strahlung und an der Probe bzw. in der Probe vorhandenen Partikeln gestreuten oder reflektierten Strahlung hervorgerufen. Durch das erfindungsgemäße Berücksichtigen bzw. Auswerten des Weglängen- bzw. Laufzeitunterschiedes von an unterschiedlichen Stellen gestreuter bzw. reflektierter Strahlung können die in einer Probe vorhandenen Partikel, wie anhand des erfindungsgemäßen Verfahrens beschrieben, detektiert werden, ohne beispielsweise die Probe durch einen zusätzlichen Farbstoff einfärben zu müssen.

Vorzugsweise handelt es sich bei der erfindungsgemäßen Vorrichtung um eine konfokale Vorrichtung zur Beobachtung chemischer und/oder biologischer Proben. Insbesondere handelt es sich um ein konfokales Mikroskop. Diese Vorrichtung weist vorzugsweise zur konfokalen Probenuntersuchung eine Blendeneinrichtung, bei der es sich vorzugsweise um eine Nipkow-Scheibe handelt, auf. Die Nipkow-Scheibe ist vorzugsweise rotierend ausgebildet. Insbesondere in Kombination mit einer Nipkow-Scheibe ist eine Mikrolinseneinrichtung, insbesondere ein Mikrolinsenarray, angeordnet. Bei diesem handelt es sich vorzugsweise ebenfalls um eine drehbare Scheibe, wobei die in einer Nipkow-Scheibe vorgesehenen Öffnungen und die in der Mikrolinsenscheibe vorgesehenen Mikrolinsen in ihrer Anordnung aufeinander abgestimmt sind. Durch die Anordnung der Mikrolinsenscheibe und der Nipkow-Scheibe ist vorzugsweise ein oder mehrere Mikrolinsen jeweils auf eine Öffnung in der Nipkow-Scheibe gerichtet bzw. lenkt Strahlung in Richtung dieser Öffnung. Alternative Blendeneinrichtungen sind in EP 97 118 354.6, in WO 98/28655 und in WO 97/31282 beschrieben.

Die erfindungsgemäße Vorrichtung, die insbesondere zur Durchführung des erfindungsgemäßen Verfahrens geeignet ist, ist vorzugsweise derart weitergebildet, dass das erfindungsgemäße Verfahren, insbesondere die bevorzugten Ausführungsformen des erfindungsgemäßen Verfahrens, durchgeführt werden können. So weist die erfindungsgemäße Vorrichtung vorzugsweise eine geeignete Steuereinrichtung, einen Strahlteiler u.dgl. auf.

Nachfolgend wird die Erfindung anhand einer bevorzugten Ausführungsform unter Bezugnahme auf die anliegenden Zeichnungen näher erläutert.

Es zeigen:
- Fig. 1: eine schematische Darstellung der erfindungsgemäßen Vorrichtung, bei der die Strahlungspulse an der Optikeinrichtung reflektiert bzw. gestreut werden, und
- Fig. 2: eine schematische Darstellung der erfindungsgemäßen Vorrichtung, bei der die Strahlungspulse an der Probe reflektiert bzw. gestreut werden.

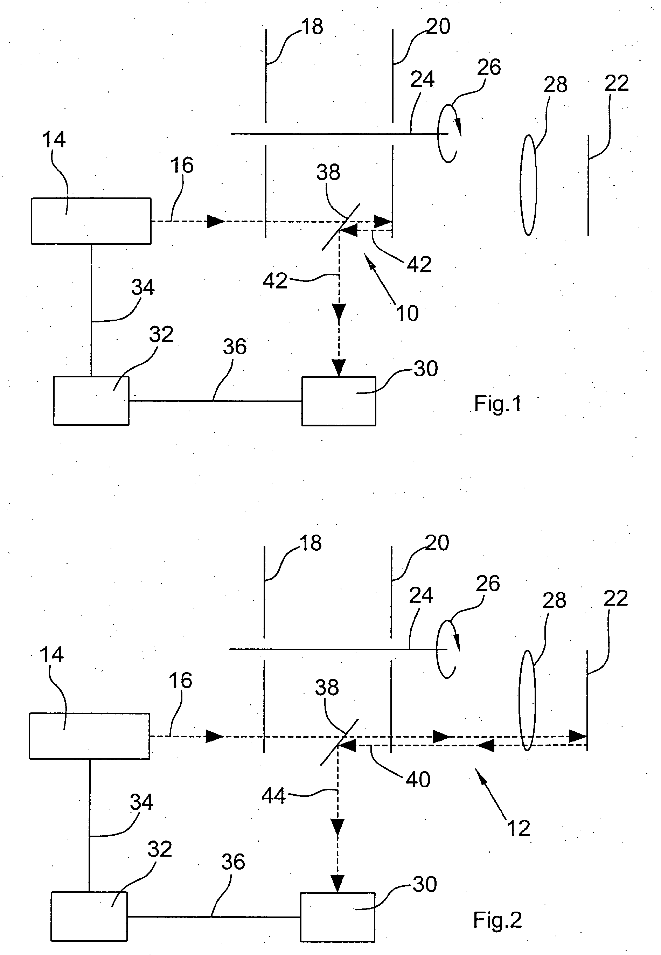

Bei der in den Fign. 1 und 2 dargestellten Vorrichtung handelt es sich um die identische Vorrichtung. Der einzige Unterschied der beiden Darstellungen besteht darin, dass unterschiedliche Strahlenverläufe 10 bzw. 12 dargestellt sind.

Die erfindungsgemäße Untersuchungsvorrichtung weist eine Bestrahlungseinrichtung 14, d.h. beispielsweise eine Lichtquelle, wie einen Laser, auf. Die Bestrahlungseinrichtung 14 erzeugt gepulste Strahlung 16. Diese wird von einer Mikrolinsenscheibe 18, die eine Vielzahl von Mikrolinsen aufweist, gebündelt und auf in einer Nipkow-Scheibe 20 vorgesehene Öffnungen gelenkt. Zum Scannen einer Probe 22 wird die Mikrolinsenscheibe 18 zusammen mit der Nipkow-Scheibe um eine Rotationsachse 24 in Richtung eines Pfeils 26 gedreht. Neben der Mikrolinsenscheibe 18 und der Nipkow-Scheibe 20 weist eine Optikeinrichtung ferner eine Abbildungsoptik 28 auf, die zwischen der Nipkow-Scheibe 20 und der Probe 22 angeordnet ist und zur Fokussierung der Strahlung in der Probe 22 dient.

Des Weiteren weist die erfindungsgemäße Vorrichtung einen Detektor 30, wie eine CCD-Kamera, auf. Zwischen dem Detektor 30 bzw. der Detektionseinrichtung 30 und der Bestrahlungseinrichtung 14 ist eine Steuereinrichtung 32 vorgesehen. Die Steuereinrichtung 32 dient insbesondere zur Synchronisation der Detektionszeiträume mit dem von der Bestrahlungseinrichtung 14 abgegebenen Strahlungspulse. Hierbei erfolgt insbesondere eine Synchronisation der Länge der Pulse mit der Länge der Detektionszeiträume sowie eine Synchronisation der zeitlichen Abstände zwischen aufeinanderfolgenden Pulsen und dem Zeitraum zwischen zwei aufeinanderfolgenden Detektionszeiten sowie eine Festlegung des Abstandes zwischen einem Lichtpuls von der Lichtquelle 14 und einem Detektionszeitraum. Hierzu ist die Synchronisationseinrichtung über elektrische Leitungen 34,36 mit der Bestrahlungseinrichtung 14 bzw. der Detektionseinrichtung 30 verbunden.

Zwischen der Mikrolinsenscheibe 18 und der Nipkow-Scheibe 20 ist ein Strahlteiler 38, wie ein dichroitischer Spiegel, vorgesehen. Der dichroitische Spiegel 38 dient dazu, dass von der Bestrahlungseinrichtung 14 kommende Strahlung 16 den Spiegel 38 passiert und andererseits von in der Probe 22 vorhandenen Partikeln kommende Strahlung 40 (Fig. 2) in Richtung der Detektionseinrichtung 30 abgelenkt wird.

Zur Durchführung des erfindungsgemäßen Verfahrens wird der Abstand zwischen der Nipkow-Scheibe 20 und der Probe 22 und der hieraus resultierende Laufzeitunterschied von Strahlungspulsen, die entweder an der Nipkow-Scheibe 20 oder an der Probe 22 reflektiert und/oder gestreut werden, ausgenutzt. Dies geht insbesondere aus den unterschiedlichen Darstellungen (Fign. 1 und 2) hervor. Hierbei werden die von der Bestrahlungseinrichtung 14 kommenden Strahlungspulse 16, die an der Nipkow-Scheibe 20 gestreut bzw. reflektiert werden (Fig. 1) sowie die durch die Probe 22 gestreuten bzw. reflektierten Strahlungspulse, auf die Detektionseinrichtung 30 umgelenkt.

Strahlungspulse 16, die an in der Probe 22 vorhandenen Partikeln gestreut oder reflektiert werden, sind als von der Probe 22 kommende Strahlung durch den Pfeil 40 dargestellt. Dieser wird durch den Spiegel 38 umgelenkt und, wie durch den Pfeil 44 dargestellt (Fig. 2), ebenfalls auf den Detektor umgelenkt. Da die Strahlungspulse in den beiden unterschiedlichen Zuständen, wie sie in den Fign. 1 und 2 dargestellt sind, unterschiedliche Weglängen zurücklegen, kommt die von der Probe reflektierte Strahlung (Fig. 2) später an der Detektionseinrichtung 30 an als von der Nipkow-Scheibe 20 reflektierte bzw. gestreute Strahlungspulse. Durch eine geeignete Auswahl der Länge und des Abstandes der von der Bestrahlungseinheit 14 erzeugten Strahlungspulse 16 in Abhängigkeit des Abstandes zwischen der Nipkow-Scheibe 20 und der Probe 22 ist es möglich, von der Nipkow-Scheibe 20 reflektierte bzw. gestreute Strahlung 42 und von der Probe 22 gestreute bzw. reflektierte Strahlung 40,44 zeitlich voneinander zu separieren. Von der Detektionseinrichtung 30 kann somit eindeutig festgestellt werden, welche gestreute bzw. reflektierte Strahlungspulse von in der Probe 22 vorhandenen Partikeln, wie Zellen, Beads, synthetische oder polymere Partikel, kommen. Aus diesen Messdaten kann insbesondere die Form und Größe eines in der Probe 22 vorhandenen Partikels vorzugsweise mittels bildgebender Verfahren bestimmt werden.

## Patentansprüche

1. Verfahren zur Detektion von Partikeln in chemischen und/oder biologischen und/ oder technischen Proben, mit den Schritten:
- Bestrahlen der Probe (22) mit elektromagnetischen Strahlungspulsen (16), die durch eine im Strahlengang angeordnete Optikeinrichtung (18,20,28) geleitet werden, und
- Detektieren der von den in der Probe (22) vorhandenen Partikeln kommenden Strahlungspulsen (40,44) mittels einer Detektionseinrichtung (30), wobei die Strahlungspulse (16) und die Detektionszeiträume derart aufeinander abgestimmt werden, dass von der Probe (22) kommende Strahlungspulse (40,44) von den von der Optikeinrichtung (18,20,28) kommenden Strahlungspulsen (42) unterscheidbar sind.

2. Verfahren nach Anspruch 1, bei welchem nach dem Detektieren der von den Partikeln kommenden Strahlungspulse (40,44) ein Bild aus detektierten Strahlungspulsen (40,44) erzeugt wird.

3. Verfahren nach Anspruch 1 oder 2, bei welchem die Dauer der Strahlungspulse (16) kleiner als die Laufzeitunterschiede von von der Probe (22) und der Optikeinrichtung (18,20,28) kommender Strahlung ist.

4. Verfahren nach einem der Ansprüche 1-3, bei welchem die Detektionszeiträume kürzer als die Dauer der Strahlungspulse sind.

5. Verfahren nach einem der Ansprüche 1-4, bei welchen die Detektionszeiträume mit der Pulsabgabe synchronisiert werden.

6. Verfahren nach einem der Ansprüche 1-5, bei welchem die Detektionszeiträume und/oder die Dauer der Strahlungspulse kleiner als 100 ns, insbesondere kleiner als 10 ns und insbesondere kleiner 1 ns sind.

7. Verfahren nach einem der Ansprüche 1-6, bei welchem die Strahlungspuls-Zwischenräume mindestens 1 ns, insbesondere mindestens 12 ns und besonders bevorzugt mindestens das Doppelte der Dauer der Strahlungspulse betragen.

8. Mikroskopiereinrichtung zur Partikel-Detektion in chemischen und/oder biologischen und/ oder technischen Proben, insbesondere zur Durchführung des Verfahrens nach einem der Ansprüche 1-7, mit
einer Bestrählungseinrichtung (14) zum Bestrahlen der Probe (22) mit gepulster elektromagnetischer Strahlung (16),
einer Detektionseinrichtung (30) zur Detektion der von den in der Probe (22) vorhandenen Partikeln kommenden Strahlungspulsen (40,44) und
einer im Strahlengang angeordneten Optikeinrichtung (18,20,28),
wobei die von der Bestrahlungseinrichtung (14) abgegebenen Strahlungspulse (16) und die Detektionszeiträume der Detektionseinrichtung (30) derart aufeinander abgestimmt sind, dass von in der Probe (22) vorhandenen Partikeln kommende Strahlungspulse (40,44) von von der Optikeinrichtung (18,20,28) kommenden Strahlungspulsen (42) unterscheidbar sind.

9. Mikroskopiereinrichtung nach Anspruch 8, **gekennzeichnet durch** eine Bilderzeugungseinrichtung zur Erzeugung eines Bildes aus den detektierten Strahlungspulsen (40,44).

10. Mikroskopiereinrichtung nach Anspruch 8 oder 9, **dadurch gekennzeichnet, dass** die Optikeinrichtung (18,20,28) eine Blendeneinrichtung (20) zur Durchführung konfokaler Probenuntersuchungen aufweist.

11. Mikroskopiereinrichtung nach Anspruch 10, **dadurch gekennzeichnet, dass** die Blendeneinrichtung (20) eine Nipkow-Scheibe ist.

12. Mikroskopiereinrichtung nach Anspruch 10 oder 11, **dadurch gekennzeichnet, dass** der Blendeneinrichtung (20) eine Mikrolinseneinrichtung (18), insbesondere ein Mikrolinsenarray, zugeordnet ist.

13. Mikroskopiereinrichtung nach einem der Ansprüche 8-12, **gekennzeichnet durch** einen vorzugsweise zwischen der Blendeneinrichtung (20) und der Mikrolinseneinrichtung (18) angeordneten Strahlteiler (38) zum Umlenken von Strahlung in Richtung der Detektionseinrichtung (30).

14. Mikroskopiereinrichtung nach einem der Ansprüche 8-13, **gekennzeichnet durch** eine mit der Detektionseinrichtung (30) und der Bestrahlungseinrichtung (14) verbundenen Steuereinrichtung (32) zur Synchronisation der Strahlungspulse und der Detektionszeiträume.
